# FASCICULE DE BREVET EUROPEEN

(11) **EP 1 211 773 B1**
(45) Date de publication et mention de la délivrance du brevet: **18.05.2011**
(21) Numéro de dépôt: 01402926.8
(22) Date de dépôt: 14.11.2001
(51) Int. Cl.: H02G 3/12

(54) **Support pour appareillage, en particulier pour appareillage électrique, à rapporter sur le socle d'une goulotte**
Träger für ein Gerät, inbesondere für ein elektrisches Gerät, zur Befestigung auf einem Kabelkanalkörper
Support for an apparatus, especially an electrical apparatus, to be mounted on a cable duct

(30) Priorité: 29.11.2000 FR 0015423
(43) Date de publication de la demande: 05.06.2002
(73) Titulaire: Legrand France, 87000 Limoges (FR); Legrand SNC, 87000 Limoges (FR)
(72) Inventeur: Jarry, Patrice, 72140 Mont Saint Jean (FR); Rayon, Jacky, 53600 Voutre (FR)
(74) Mandataire: Santarelli

(56) Documents cités:
- EP-A- 0 862 253
- DE-U- 29 909 946

## Description

La présente invention concerne d'une manière générale les goulottes du type de celles mises en oeuvre, par exemple, pour le support, le logement et la protection de divers appareillages, et en particulier de divers appareillages électriques, aussi bien que pour le support, le logement et la protection des conducteurs ou des canalisations nécessaires à la desserte de ces appareillages.

L'invention concerne plus particulièrement un support pour appareillage, en particulier pour appareillage électrique, à rapporter transversalement sur le socle d'une goulotte à retours dirigés l'un vers l'autre, comprenant au moins une traverse, s'étendant selon une direction générale X, qui comporte, sur deux bords d'extrémité opposés, des moyens d'engagement aptes à venir en prise avec lesdits retours.

On connaît déjà des supports pour appareillage du type précité, notamment des documents FR 2 741 755 et DE 4 110 690.

Selon le document FR 2 741 755, appartenant à la demanderesse, chaque traverse du support pour appareillage comprend, sur ses deux bords d'extrémité, des moyens de rainure dans lesquels sont engagés les retours des ailes latérales du socle de la goulotte.

Selon le document DE 4 110 690, le support pour appareillage est fixé sur les retours des ailes du socle de la goulotte à l'aide de pattes qui viennent s'emboîter dans des agencements particuliers desdits retours d'ailes.

Au surplus, le verrouillage du support pour appareillage sur le socle de la goulotte est réalisé à l'aide de vis qui viennent plaquer une plaque de fixation sur la face arrière desdits retours.

L'inconvénient principal des supports précités est qu'ils nécessitent, pour leur mise en place sur le socle d'une goulotte, l'écartement des retours d'ailes. Cette manoeuvre de mise en place est délicate surtout dans le cas par exemple de goulottes posées en angle, et ne permet pas de poser ledit support en aveugle, lorsque par exemple celui-ci est équipé d'une applique qui repose sur un tronçon de couvercle de fermeture du socle de la goulotte.

Au surplus, dans le cas du support pour appareillage selon le document DE 4 110 690, il est nécessaire, pour le verrouillage du support, de laisser dégagé l'accès aux vis de fixation après la mise en place du support pour appareillage sur les retours des ailes latérales du socle de la goulotte. Cela interdit la pose en aveugle dudit support.

Afin de remédier aux inconvénients précités, l'invention propose un support pour appareillage tel que défini en introduction, dans lequel lesdits moyens d'engagement comprennent, sur au moins un desdits bords d'extrémité, au moins une dent d'encliquetage solidarisée à ladite traverse par l'intermédiaire d'une liaison élastique qui autorise un léger déplacement en translation d'aller-retour de ladite dent d'encliquetage selon ladite direction générale X de la traverse entre une première position en saillie et une seconde position en retrait par rapport à ladite première position.

Ainsi, avantageusement, un tel support pour appareillage peut être facilement mis en place sur le socle d'une goulotte, par simple emboîtement, sans nécessiter l'écartement préalable des ailes latérales du socle de la goulotte.

En effet, lorsque ce support est mis en place sur le socle de la goulotte, chaque dent d'encliquetage, venant au contact d'un retour d'aile du socle de la goulotte, s'efface en se déplaçant légèrement en translation depuis sa première position en saillie vers sa seconde position en retrait, puis revient élastiquement dans sa première position en saillie en se positionnant sous ledit retour, en appui contre celui-ci.

Selon une caractéristique avantageuse du support pour appareillage selon l'invention, chaque dent d'encliquetage comprend une surface d'appui et une surface chanfreinée qui se raccorde continûment à ladite surface d'appui, ladite surface chanfreinée formant une surface d'engagement apte, lors de la mise en place dudit support sur le socle de la goulotte, à s'effacer automatiquement sous un desdits retours dudit socle pour que ladite surface en appui vienne en appui contre celui-ci.

Cette surface chanfreinée de chaque dent d'encliquetage facilite la pose en aveugle du support pour appareillage selon l'invention sur le socle d'une goulotte.

Avantageusement, un tel support pour appareillage permet une pose en applique sur le couvercle de fermeture de la goulotte d'un appareillage, par exemple un appareillage d'éclairage, qui, notamment, présente une largeur plus faible que la largeur de l'ouverture du socle de la goulotte.

A cette fin, le couvercle ou le tronçon de couvercle concerné est pourvu de perçages pour le passage du câble ou des conducteurs d'alimentation électrique de l'appareillage d'éclairage, ainsi que pour le passage de moyens de fixation dudit appareillage, par exemple des vis, pour la fixation de l'appareillage conforme à l'invention sur le support.

Le support pour appareillage conforme à l'invention est ensuite mis en place sur la face inférieure dudit couvercle et est maintenu par un léger coincement entre les nervures d'encliquetage de ce dernier.

L'appareillage ayant été fixé au support pour appareillage et câblé, la pose de l'ensemble sur le socle de la goulotte peut alors être réalisée en aveugle, ledit support pour appareillage venant, par l'intermédiaire de sa ou ses dents d'encliquetage, en prise avec les retours des ailes latérales du socle de la goulotte (comme précité), lors de l'encliquetage du couvercle sur ledit socle.

D'autres caractéristiques avantageuses et non limitatives sont les suivantes :
- chaque traverse comprend, sur une face arrière tournée vers l'intérieur du socle de la goulotte, de part et d'autre de chaque dent d'encliquetage, deux glissières de guidage à translation de ladite dent d'encliquetage ;
- chaque glissière est formée par un plot s'étendant selon l'axe X de la traverse et présentant une surface externe de guidage sur laquelle est destinée à glisser une surface de guidage complémentaire prévue sur un côté latéral de ladite dent d'encliquetage ;
- chacune desdites glissières est portée par une patte qui s'étend généralement perpendiculairement au plan de la face arrière de ladite traverse et qui présente un profil sensiblement en pointe avec une base solidaire de ladite face arrière plus large que son extrémité libre, de sorte que ladite patte comprend une tranche externe s'étendant légèrement en oblique par rapport à la direction générale de ladite patte, cette tranche externe formant, lors de la mise en place dudit support sur le socle de la goulotte, une surface d'appui sur un desdits retours dudit socle apte à provoquer automatiquement un léger écartement des ailes latérales dudit socle, si ces ailes latérales sont trop rapprochées en sortie de production du socle ;
- ladite liaison élastique comprend au moins une patte élastique ondulée qui vient de formation avec ladite dent d'encliquetage et qui présente à une extrémité des moyens de fixation à ladite traverse ;
- lesdits moyens de fixation sont des moyens d'encliquetage ;
- lesdits moyens d'encliquetage comprennent, à l'extrémité de ladite patte élastique ondulée, un bourrelet coopérant élastiquement avec un plot porté par la face arrière de la traverse ;
- chaque dent d'encliquetage comprend deux pattes élastiques ondulées parallèles formant ladite liaison élastique ;
- lesdits moyens d'engagement comprennent, sur chacun desdits bords d'extrémité de ladite traverse, une dent d'encliquetage ;
- les deux dents d'encliquetage forment deux pièces distinctes rapportées par leur liaison élastique associée à ladite traverse ;
- les deux dents d'encliquetage et leur liaison élastique associée constituent une pièce unique fixée à ladite traverse par une partie centrale rigide formant partie de raccordement entre lesdites liaisons élastiques ; et
- le support pour appareillage se présente sous la forme d'un cadre avec deux parties longitudinales parallèles reliant deux traverses d'extrémité équipées, sur leurs bords d'extrémité opposés, des dents d'encliquetage à liaison élastique.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue en perspective éclatée du support pour appareillage selon l'invention à mettre en place sur un socle de goulotte ;
- la figure 2 est une vue en perspective de dessus du support pour appareillage de la figure 1 ;
- la figure 3 est une vue en perspective de dessous du support pour appareillage de la figure 2 ;
- la figure 4 est une vue en perspective de dessous d'une variante de réalisation du support pour appareillage de la figure 3 ;
- la figure 5 est une vue en perspective de dessous du couvercle de fermeture de la goulotte représentée sur la figure 1, sur lequel est posé en applique un appareillage d'éclairage fixé au support pour appareillage selon l'invention ;
- la figure 6 est une vue en coupe du support pour appareillage monté dans la goulotte de la figure 1 ; et
- la figure 7 est une vue de côté de la goulotte de la figure 1 fermée par son couvercle muni en applique d'un appareillage d'éclairage fixé au support pour appareillage selon l'invention.

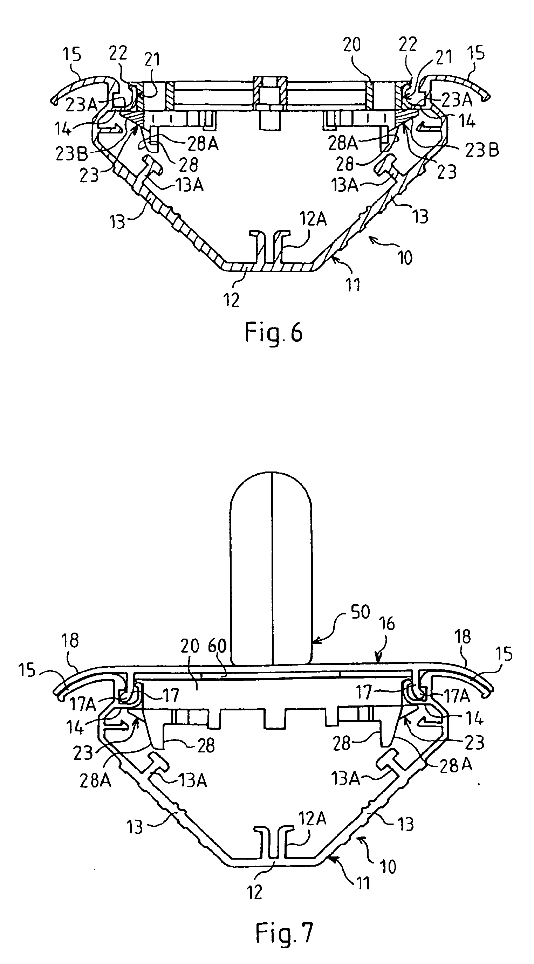

Tel qu'illustré sur les figures, et ainsi qu'il est mieux visible sur la figure 7, il s'agit de rapporter, transversalement, sur un socle 11 d'une goulotte 10, de l'une à l'autre de deux parois longitudinales 13 de celui-ci, un quelconque appareillage 50. Ici, avantageusement, l'appareillage 50 est un appareillage d'éclairage à tube néon qui est fixé en applique sur le couvercle de fermeture 16 du socle 11 de la goulotte 10.

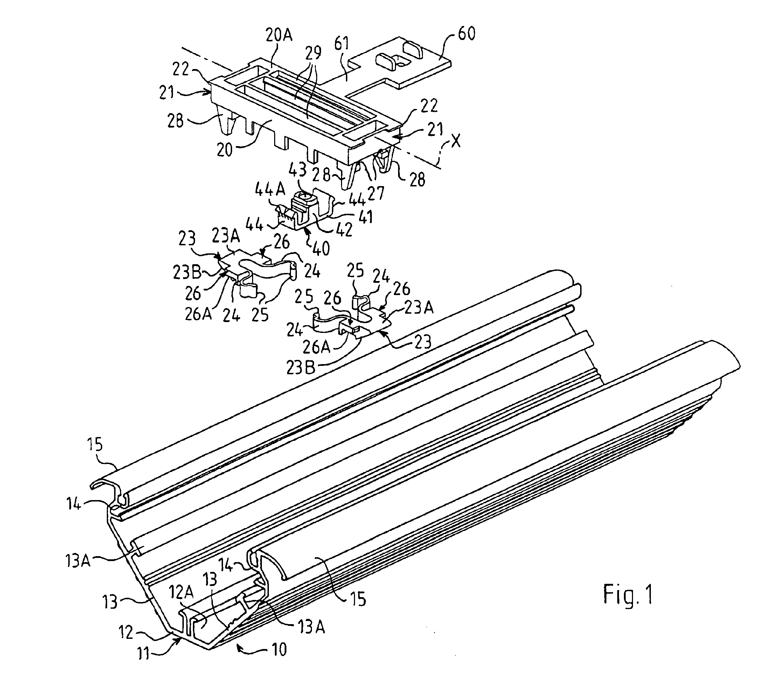

Dans la forme de réalisation plus particulièrement représentée sur les figures 1, 6 et 7, le socle 11 de la goulotte 10 a, globalement, en section transversale, un profil en V, et ne forme, longitudinalement, par lui-même, qu'un seul compartiment.

Les parois longitudinales 13 entre lesquelles doit être monté l'appareillage d'éclairage 50 forment donc dans ce cas les ailes latérales extérieures du socle 11 de la goulotte 10.

Elles s'étendent globalement en oblique à partir de la semelle 12 du socle 11, et elles ont l'une et l'autre une même hauteur.

En outre, ces ailes latérales 13 présentent, l'une et l'autre, le long de leur bord libre, un retour 14 qui, sensiblement parallèle à la semelle 12, est dirigé vers l'intérieur, et qui, pour l'encliquetage d'un couvercle 16, forme un bourrelet globalement conformé en rainure.

Ainsi, les ailes latérales 13 du socle 11 de la goulotte 10 comportent des retours 14 dirigés l'un vers l'autre.

Les ailes latérales 13 du socle 11 de la goulotte 10 comportent, ici, également, le long de leur bord libre, un bord 15 tombant vers l'extérieur de la goulotte 10. La face interne des ailes latérales 13 du socle 11 de la goulotte 10, ainsi que la face intérieure de la semelle 12 sont pourvues de nervures longitudinales 13A, 12A.

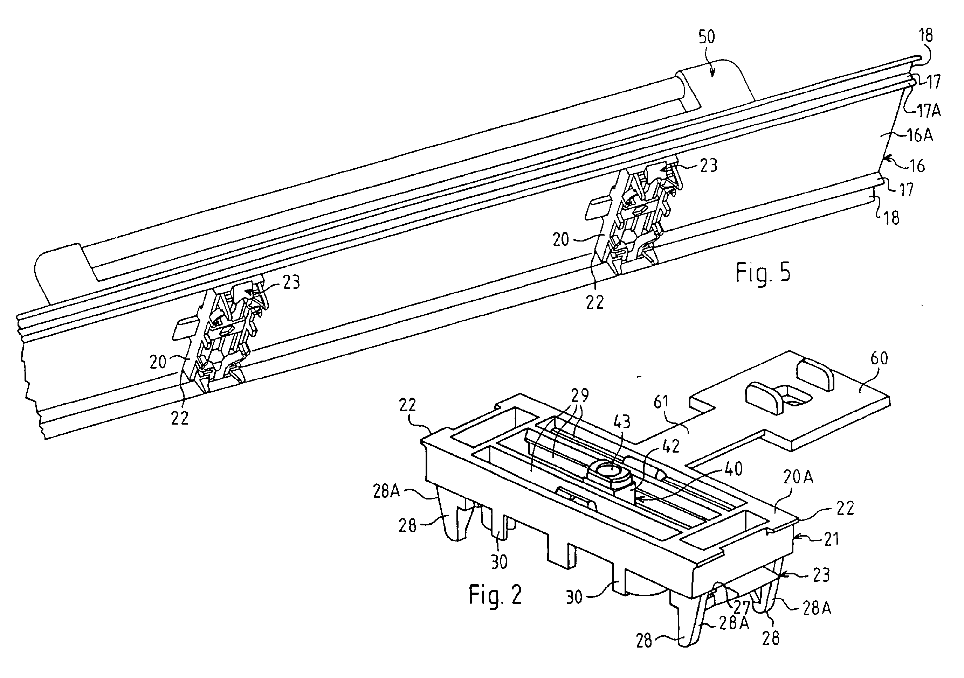

Le couvercle de fermeture 16 du socle 11 de la goulotte 10, plus particulièrement représenté sur les figures 5 et 7, comporte des pattes longitudinales 17 pourvues à leur extrémité libre de bourrelets 17A pour l'encliquetage dans les rainures formées par les retours 14 des ailes latérales 13 du socle 11 de la goulotte 10. Ce couvercle 16 comporte, entre les deux pattes d'encliquetage 17, une partie d'obturation 16A et, sur ses côtés longitudinaux, à l'extérieur de chacune des pattes d'encliquetage 17, des bords tombants 18 destinés à recouvrir les bords 15 tombants du socle 11 de la goulotte 10.

La goulotte 10 équipée de son couvercle 16 est bien connue en soi et ne sera donc pas décrite plus en détail ici.

En outre, il est représenté, sur les figures, un support pour appareillage, en particulier un appareillage électrique, permettant ici de poser un appareillage d'éclairage 50 à tube néon en applique sur le couvercle 16.

Ce support pour appareillage comporte au moins une traverse 20 s'étendant selon une direction générale X apte à être rapportée transversalement sur le socle 11 de la goulotte 10 entre les deux retours 14 dirigés l'un vers l'autre.

Dans le cas particulier représenté plus particulièrement sur la figure 5, le support pour appareillage comporte deux traverses 20 identiques espacées l'une de l'autre pour le montage de l'appareillage d'éclairage 50 relativement long.

Ainsi, chacune des traverses 20 est placée à proximité d'une extrémité dudit appareillage d'éclairage 50.

Bien entendu, ce support pour appareillage permet de rapporter, sur le socle de la goulotte, d'autres appareillages tels que des prises de courant fort ou faible ou encore des interrupteurs.

Chaque traverse 20 comporte, dans une partie centrale, trois ouvertures traversantes longitudinales parallèles 29 formant rainures de montage d'un plot 40 pour la fixation par vis de l'appareillage 50 sur le support pour appareillage.

Ici, ce plot 40 comporte, sur une base 41, une protubérance centrale 42 pourvue d'un orifice taraudé 43 destiné à accueillir par exemple une vis de fixation de l'appareillage 50 sur le support pour appareillage et, de part et d'autre de cette protubérance centrale 42, des ailes de montage 44 pourvues sur leur face externe de crans 44A.

Ce plot 40 ne faisant pas partie explicitement de l'invention ne sera pas décrit dans le détail ici.

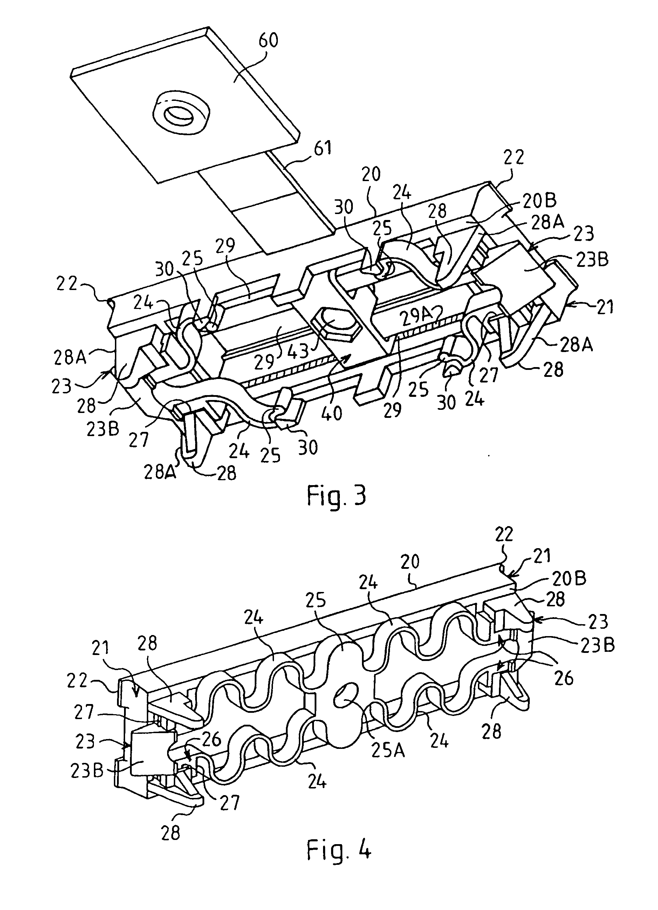

Il suffira de dire que la protubérance centrale 42 du plot 40 est introduite par la face arrière 20B de la traverse 20 dans l'ouverture centrale 29 de sorte que l'orifice taraudé 43 émerge sur la face avant 20A de la traverse 20 pour être accessible depuis l'extérieur. En outre, les ailes de montage 44 s'engagent dans les deux ouvertures 29 positionnées de part et d'autre de ladite ouverture centrale 29 et viennent en prise, par leurs crans 44A, avec des crans 29A de forme complémentaire prévus sur une des parois latérales desdites ouvertures 29 pour la fixation du plot 40 sur la traverse 20 (voir figure 3).

Cette coopération de crans permet de positionner le plot 40 en différentes positions le long de la traverse 20.

En outre, chaque traverse 20 comporte, sur deux bords d'extrémité 21 opposés, des moyens d'engagement 22, 23 aptes à venir en prise avec lesdits retours 14 du socle 11 de la goulotte 10.

Ces moyens d'engagement comprennent des moyens de rainure prévus en creux sur la tranche correspondante de la traverse.

Autrement dit, chaque traverse 20 forme, sur chacune de ses tranches transversales opposées, et tout au long de celles-ci, pour la définition des moyens de rainure correspondants, en l'espèce une rainure, une lèvre 22 située du côté de la face avant 20A de la traverse 20.

Comme le montre plus particulièrement la figure 6, lorsque la traverse 20 est mise en place sur le socle 11 de la goulotte 10, chaque lèvre 22 vient en appui sur le retour 14 correspondant dudit socle 11.

En outre, avantageusement, et c'est l'objet de la présente invention, les moyens d'engagement de chaque traverse 20 comprennent, ici, sur chacun desdits bords d'extrémité 21 opposés, une dent d'encliquetage 23 solidarisée à ladite traverse 20 par l'intermédiaire d'une liaison élastique 24 qui autorise un léger déplacement en translation d'aller-retour de ladite dent d'encliquetage 23 selon ladite direction générale X de la traverse 20 entre une première position en saillie (voir figure 2) et une seconde position en retrait par rapport à ladite première position.

Selon le mode de réalisation représenté sur les figures 1 à 3 et 5 à 7, les deux dents d'encliquetage 23 forment deux pièces distinctes rapportées par leur liaison élastique 24 associée à ladite traverse 20.

Chaque dent d'encliquetage 23 comporte une surface d'appui 23A orientée du côté de la face avant 20A de la traverse 20 et une surface chanfreinée 23B, tournée du côté de la face arrière 20B de la traverse 20, qui se raccorde continûment à ladite surface d'appui 23A. La surface chanfreinée 23B de chaque dent d'encliquetage 23 forme une surface d'engagement apte, lors de la mise en place du support pour appareillage sur le socle 11 de la goulotte 10, à s'effacer automatiquement sous un desdits retours 14 du socle 11 de la goulotte 10 pour que la surface d'appui 23A de la dent d'encliquetage 23 vienne en appui contre celui-ci (voir figures 6 et 7).

En outre, selon le mode de réalisation représenté sur les figures, la liaison élastique de chaque dent d'encliquetage comprend ici deux pattes élastiques ondulées 24 parallèles qui viennent de formation avec ladite dent d'encliquetage 23 et qui présentent chacune, à une extrémité libre, des moyens de fixation 25 à la traverse 20.

Ici, lesdits moyens de fixation sont des moyens d'encliquetage qui comprennent, à l'extrémité de chacune des pattes élastiques ondulées 24, un bourrelet 25 coopérant élastiquement avec un plot 30 porté par la face arrière 20B de la traverse 20.

Chaque dent d'encliquetage 23 est fixée sur la face arrière 20B de la traverse 20, de sorte que, dans sa première position en saillie, elle complète la rainure formée sur chacune des tranches transversales de ladite traverse en constituant du côté de la face arrière 20B le pendant des lèvres 22 situées du côté de la face avant 20A de la traverse.

Par ailleurs, chaque traverse 20 comprend, sur sa face arrière 20B tournée vers l'intérieur du socle 11 de la goulotte 10, de part et d'autre de chaque dent d'encliquetage 23, deux glissières 27 de guidage à translation de ladite dent d'encliquetage 23.

Selon le mode de réalisation représenté sur les figures, chaque glissière est formée par un plot 27 s'étendant selon l'axe X de la traverse 20 et présentant une surface de guidage placée en regard de la face arrière 20B de la traverse 20, sur laquelle est destinée à glisser une surface de guidage complémentaire 26A prévue sur chacune des dents d'encliquetage 23.

Chaque surface de guidage complémentaire 26A est formée par la face inférieure d'un plot 26 prévu sur chaque côté latéral de chaque dent d'encliquetage 23. Les plots 26 forment la jonction entre les surfaces d'appui 23A et chanfreinée 23B, et les pattes élastiques ondulées 24.

Les glissières 27 prévues sur chacune des traverses 20 s'étendent sur une longueur telle que la résistance mécanique de l'ensemble formé par la traverse et les dents d'encliquetage est satisfaisante. Cette résistance mécanique est d'autant plus satisfaisante que le jeu existant entre les glissières et les traverses est très faible.

Selon une caractéristique avantageuse du support pour appareillage représenté sur les différentes figures, chacune des glissières 27 de chaque traverse 20 est portée par une patte 28 qui s'étend généralement perpendiculairement au plan de la face arrière 20B de ladite traverse 20 et qui présente un profil sensiblement en pointe avec une base solidaire de la face arrière 20B plus large que son extrémité libre, de sorte que chacune des pattes 28 comprend une tranche externe 28A s'étendant légèrement en oblique par rapport à la direction générale de la patte 28. Cette tranche externe 28A forme, lors de la mise en place dudit support sur le socle 11 de la goulotte 10, une surface d'appui sur un desdits retours 14 du socle 11 apte à provoquer automatiquement un léger écartement des ailes latérales 13 dudit socle 11, si ces ailes latérales sont trop rapprochées en sortie de production dudit socle 11.

Chaque traverse 20 comporte ici quatre pattes 28 positionnées sensiblement aux quatre coins de la traverse 20.

Ces pattes 28, comme cela a été explicité ci-dessus, permettent de compenser les écarts de largeur des ouvertures des socles de goulottes et notamment permettent le montage de la traverse sur un socle de goulotte dont la largeur d'ouverture est légèrement inférieure à ce qui est prévu, du fait des écarts de fabrication, en provoquant automatiquement, lors du montage de la traverse sur le socle de la goulotte, un léger écartement des ailes latérales dudit socle.

Selon une variante de réalisation du support pour appareillage représenté plus particulièrement sur la figure 4, les deux dents d'encliquetage 23 de chaque traverse 20 et leur liaison élastique 24 associée, comprenant chacune deux pattes élastiques ondulées 24, constituent une pièce unique fixée à ladite traverse 20, sur sa face arrière 20B, par une partie centrale rigide 25 pourvue d'un orifice central 25A, cette partie centrale formant partie de raccordement entre lesdites liaisons élastiques 24.

Un tel mode de réalisation impose cependant un ensemble de dents d'encliquetage et liaisons élastiques associées par largeur de socle de goulotte, contrairement au mode de réalisation des figures 1 à 3 et 5 à 7, selon lequel les dents d'encliquetage sont rapportées aux extrémités de chaque traverse 20 du support pour appareillage.

En outre, comme cela apparaît plus particulièrement sur les figures 1, 2, 3, chaque traverse 20 du support pour appareillage comporte ici une entretoise 60 reliée à la traverse par un lien découpable 61. Cette entretoise 60 permet d'adapter la traverse à des hauteurs de couvercles différents, par exemple à un couvercle s'étendant entre les retours d'ailes, venant à effleurement de la traverse et à un couvercle recouvrant les retours d'ailes, comme cela est le cas du couvercle 16 de la figure 5.

Chaque traverse 20 est réalisée d'une seule pièce par moulage d'une matière plastique.

Chaque dent d'encliquetage 23 du premier mode de réalisation représenté sur les figures 1 à 3 et 5 à 7 est également réalisée d'une seule pièce par moulage d'une matière plastique.

Avantageusement, le support pour appareillage décrit ci-dessus peut se monter facilement sur le socle de la goulotte et permet notamment de fixer sur ce socle un appareillage d'éclairage 50 du type applique, tel que représenté par exemple sur la figure 5, qui, dû pour partie à sa faible largeur relativement à celle de l'ouverture du socle 11 de la goulotte 10, est monté sur le couvercle 16 de la goulotte 10.

A cette fin, le couvercle 16 est pourvu de perçages réalisés pour le passage du câble ou des conducteurs d'alimentation électrique, ainsi que pour le passage de moyens de fixation de l'appareillage d'éclairage 50 au support pour appareillage, ici des vis de fixation destinées à s'engager dans les trous taraudés 43 des plots 40 des traverses 20.

Les traverses 20 sont ensuite mises en place sur la face interne de la partie d'obturation 16A du couvercle 16 et maintenues par un léger coincement entre les pattes d'encliquetage 17 du couvercle 16, et notamment de ses lèvres 22.

L'appareillage d'éclairage 50 ayant été câblé et fixé au couvercle 16 par l'intermédiaire des traverses 20, la pose de l'ensemble est réalisée en aveugle sur le socle 11 de la goulotte 10, c'est-à-dire que les traverses sont engagées sur les retours 14 du socle 11 lors de l'emboîtement du couvercle 16 sur celui-ci.

Lors de la mise en place du couvercle 16 sur le socle 11 de la goulotte 10, les dents d'encliquetage des traverses 20, pourvues de leur surface chanfreinée 23B d'engagement, s'effacent automatiquement sous les retours 14 dudit socle 11 pour venir en appui par leur face d'appui 23A contre ceux-ci. Cet effacement, aidé par les surfaces chanfreinées 23B des dents d'encliquetage 23, ne peut se faire que par l'intermédiaire des liaisons élastiques 24 desdites dents d'encliquetage 23 qui autorisent un léger déplacement en translation d'aller-retour de celles-ci selon la direction générale X des traverses 20 entre une première position en saillie et une seconde position en retrait par rapport à cette première position.

Lors de leur déplacement, les dents d'encliquetage coulissent dans les glissières 27 prévues sur la face arrière 20B des traverses 20, sur une longueur telle que la résistance mécanique de l'ensemble est tout à fait satisfaisante.

Une fois mises en place, les traverses 20 (comme le montrent plus particulièrement les figures 6 et 7) sont en appui, d'une part, sur les retours 14 du socle de la goulotte par les lèvres 22, et, d'autre part, sous les retours 14 du socle de la goulotte par les dents d'encliquetage 23.

De telles traverses équipées des dents d'encliquetage 23, comme décrit ci-dessus, ne nécessitent alors aucun écartement préalable des ailes latérales du socle de la goulotte.

En particulier, selon une variante non représentée, on pourra prévoir que le support pour appareillage se présente sous la forme d'un cadre, chacun des bords longitudinaux opposés portant plusieurs pattes d'encliquetage à liaison élastique.

On peut prévoir également que le support pour appareillage se présente sous la forme d'un cadre comprenant deux parties longitudinales parallèles reliant deux traverses d'extrémité munies des dents d'encliquetage à liaison élastique, comme cela a été décrit dans le détail précédemment.

## Revendications

1. Support pour appareillage, en particulier pour appareillage électrique, à rapporter transversalement sur le socle (11) d'une goulotte (10) à retours (14) dirigés l'un vers l'autre, comportant au moins une traverse (20), s'étendant selon une direction générale X, qui comporte, sur deux bords d'extrémité (21) opposés, des moyens d'engagement (22, 23) aptes à venir en prise avec lesdits retours (14), **caractérisé en ce que** lesdits moyens d'engagement comprennent, sur au moins un desdits bords d'extrémité (21), au moins une dent d'encliquetage (23) solidarisée à ladite traverse (20) par l'intermédiaire d'une liaison élastique (24) qui autorise un léger déplacement en translation d'aller-retour de ladite dent d'encliquetage (23) selon ladite direction générale X entre une première position en saillie et une seconde position en retrait par rapport à ladite première position.

2. Support pour appareillage selon la revendication 1, **caractérisé en ce que** chaque dent d'encliquetage (23) comprend une surface d'appui (23A) et une surface chanfreinée (23B) qui se raccorde continûment à ladite surface d'appui (23A), ladite surface chanfreinée (23B) formant une surface d'engagement apte, lors de la mise en place dudit support sur le socle (11) de la goulotte (10), à s'effacer automatiquement sous un desdits retours (14) dudit socle (11) pour que ladite surface d'appui (23A) vienne en appui contre celui-ci.

3. Support pour appareillage selon l'une des revendications 1 ou 2, **caractérisé en ce que** chaque traverse (20) comprend, sur une face arrière (20B) tournée vers l'intérieur du socle (11) de la goulotte (10), de part et d'autre de chaque dent d'encliquetage (23), deux glissières (27) de guidage à translation de ladite dent d'encliquetage (23).

4. Support pour appareillage selon la revendication 3, **caractérisé en ce que** chaque glissière est formée par un plot (27) s'étendant selon l'axe X de la traverse (20) et présentant une surface externe de guidage sur laquelle est destinée à glisser une surface de guidage complémentaire (26A) prévue sur un côté latéral de ladite dent d'encliquetage (23).

5. Support pour appareillage selon l'une des revendications 3 ou 4, **caractérisé en ce que** chacune desdites glissières (27) est portée par une patte (28) qui s'étend généralement perpendiculairement au plan de la face arrière (20B) de ladite traverse (20) et qui présente un profil sensiblement en pointe avec une base solidaire de ladite face arrière (20B) plus large que son extrémité libre, de sorte que ladite patte (28) comprend une tranche externe (28A) s'étendant légèrement en oblique par rapport à la direction générale de ladite patte (28), cette tranche externe (28A) formant, lors de la mise en place dudit support sur le socle (11) de la goulotte (10), une surface d'appui sur un desdits retours (14) dudit socle apte à provoquer automatiquement un léger écartement des ailes latérales (13) dudit socle (11).

6. Support pour appareillage selon l'une des revendications précédentes, **caractérisé en ce que** ladite liaison élastique comprend au moins une patte élastique ondulée (24) qui vient de formation avec ladite dent d'encliquetage (23) et qui présente à une extrémité des moyens de fixation (25) à ladite traverse (20).

7. Support pour appareillage selon la revendication 6, **caractérisé en ce que** lesdits moyens de fixation sont des moyens d'encliquetage.

8. Support pour appareillage selon la revendication 7, **caractérisé en ce que** lesdits moyens d'encliquetage comprennent, à l'extrémité de ladite patte élastique ondulée (24), un bourrelet (25) coopérant élastiquement avec un plot (30) porté par la face arrière (20B) de la traverse (20).

9. Support pour appareillage selon l'une des revendications 6 à 8, **caractérisé en ce que** chaque dent d'encliquetage (23) comprend deux pattes élastiques ondulées (24) parallèles formant ladite liaison élastique.

10. Support pour appareillage selon l'une des revendications précédentes, **caractérisé en ce que** lesdits moyens d'engagement comprennent, sur chacun desdits bords d'extrémité (21) de ladite traverse, une dent d'encliquetage (23).

11. Support pour appareillage selon la revendication 10, **caractérisé en ce que** les deux dents d'encliquetage (23) forment deux pièces distinctes rapportées par leur liaison élastique (24) associée à ladite traverse (20).

12. Support pour appareillage selon la revendication 10, **caractérisé en ce que** les deux dents d'encliquetage (23) et leur liaison élastique (24) associée constituent une pièce unique fixée à ladite traverse (20) par une partie centrale rigide (25) formant partie de raccordement entre lesdites liaisons élastiques (24).

13. Support pour appareillage selon l'une des revendications 1 à 12, **caractérisé en ce qu'**il se présente sous la forme d'un cadre avec deux parties longitudinales parallèles reliant deux traverses d'extrémité équipées, sur leurs bords d'extrémité opposés, des dents d'encliquetage à liaison élastique.

## Claims

1. Equipment support, in particular for electrical equipment, to be fitted transversely on the base (11) of a channel (10) having returns (14) directed towards each other, comprising at least one cross piece (20) extending in a general direction X, which comprises on two opposite end edges (21) engagement means (22, 23) capable of engaging with said returns (14), **characterized in that** said engagement means comprise on at least one of said end edges (21) at least one snap-locking tooth (23) secured to said cross piece (20) by means of a flexible connection (24) which allows a slight outward and return movement in translational motion of said snap-locking tooth (23) in said general direction X between a first projecting position and a second retracted position vis-à-vis said first position.

2. Equipment support according to claim 1, **characterized in that** each snap-locking tooth (23) comprises a bearing surface (23A) and a chamfered surface (23B) continuously joined to said bearing surface (23A), said chamfered surface (23B) forming an engagement surface capable, during the positioning of said support on the base (11) of the channel (10), of automatically fitting under one of said returns (14) of said base (11) so that said bearing surface (23A) rests against the latter.

3. Equipment support according to one of claims 1 or 2, **characterized in that** each cross piece (20) comprises, on a rear face (20B) turned towards the inside of the base (11) of the channel (10), on either side of each snap-locking tooth (23), two guides (27) for guiding said snap-locking tooth (23) in translational motion.

4. Equipment support according to claim 3, **characterized in that** each guide is formed by a stud (27) extending along the axis X of the cross piece (20) and having an outer guiding surface on which a complementary guiding surface (26A) provided on a lateral side of said snap-locking tooth (23) is intended to slide.

5. Equipment support according to one of claims 3 or 4, **characterized in that** each of said guides (27) is carried by a lug (28) which extends generally perpendicularly to the plane of the rear face (20B) of said cross piece (20) and which has a substantially pointed profile with a base secured to said rear face (20B) wider than its free end, such that said lug (28) comprises an outer portion (28A) extending slightly obliquely relative to the general direction of said lug (28), this outer portion (28A) forming, during the installation of said support on the base (11) of the channel (10), a surface which bears on one of said returns (14) of said base capable of automatically causing a slight separation of the lateral wings (13) of said base (11).

6. Equipment support according to one of the previous claims, **characterized in that** said flexible connection comprises at least one corrugated flexible lug (24) which is formed together with said snap-locking tooth (23) and which has at one end fixing means (25) to said cross piece (20).

7. Equipment support according to claim 6, **characterized in that** said fixing means are snap-locking means.

8. Equipment support according to claim 7, **characterized in that** said snap-locking means comprise, at the end of said corrugated flexible lug (24), a flange (25) flexibly cooperating with a stud (30) carried by the rear face (20B) of the cross piece (20).

9. Equipment support according to one of claims 6 to 8, **characterized in that** each snap-locking tooth (23) comprises two parallel corrugated flexible lugs (24) forming said flexible connection.

10. Equipment support according to one of the previous claims, **characterized in that** said engagement means comprise a snap-locking tooth (23) on each of said end edges (21) of said cross piece.

11. Equipment support according to claim 10, **characterized in that** the two snap-locking teeth (23) form two separate parts attached by their associated flexible connection (24) to said cross piece (20).

12. Equipment support according to claim 10, **characterized in that** the two snap-locking teeth (23) and their associated flexible connection (24) constitute a single part fixed to said cross piece (20) by a stiff central member (25) forming a connection member between said flexible connections (24).

13. Equipment support according to one of claims 1 to 12, **characterized in that** it is in the form of a frame with two parallel longitudinal members linking two end cross pieces equipped on their opposite end edges with flexibly attached snap-locking teeth.

## Patentansprüche

1. Träger für Installationsgeräte, insbesondere Elektro-Installationsgeräte, der auf den Sockel (11) eines Kabelkanals (10) mit einander zugewandten Rücksprüngen (14) quer aufsetzbar ist, der wenigstens einen sich in eine allgemeine Richtung X erstreckenden Querträger (20) umfasst, der an zwei entgegengesetzten äußeren Rändern (21) Eingriffsmittel (22, 23) aufweist, die mit den Rücksprüngen (14) in Eingriff gelangen können,
**dadurch gekennzeichnet, dass** die Eingriffsmittel an wenigstens einem der äußeren Ränder (21) wenigstens einen Rastzahn (23) aufweisen, der mit dem Querträger (20) mittels einer elastischen Verbindung (24) fest verbunden ist, die eine geringe translatorische Hin- und Herbewegung des Rastzahns (23) in der allgemeinen Richtung X zwischen einer ersten vorspringenden Stellung und einer zweiten, bezüglich der ersten Stellung nach hinten versetzten Stellung zulässt.

2. Installationsgeräteträger nach Anspruch 1,
**dadurch gekennzeichnet, dass** jeder Rastzahn (23) eine Auflagefläche (23A) und eine abgeschrägte Fläche (23B) aufweist, die sich ohne Unterbrechung an die Auflagefläche (23A) anschließt, wobei die abgeschrägte Fläche (23B) eine Eingriffsfläche bildet, die beim Anbringen des Trägers auf dem Sockel (11) des Kabelkanals (10) automatisch unter einen der Rücksprünge (14) des Sockels (11) zu verschwinden vermag, damit die Auflagefläche (23A) gegen diesen in Anlage kommt.

3. Installationsgeräteträger nach einem der Ansprüche 1 oder 2,
**dadurch gekennzeichnet, dass** jeder Querträger (20) auf einer zur Innenseite des Sockels (11) des Kabelkanals (10) gewandten Rückseite (20B) beidseits eines jeden Rastzahns (23) zwei Schienen (27) zur translatorischen Führung des Rastzahns (23) umfasst.

4. Installationsgeräteträger nach Anspruch 3,
**dadurch gekennzeichnet, dass** jede Schiene von einem Stift (27) gebildet ist, der sich längs der Achse X des Querträgers (20) erstreckt und eine äußere Führungsfläche aufweist, auf der eine komplementäre Führungsfläche (26A) gleiten soll, die auf einer Seite des Rastzahns (23) vorgesehen ist.

5. Installationsgeräteträger nach einem der Ansprüche 3 oder 4,
**dadurch gekennzeichnet, dass** jede Schiene (27) von einem Arm (28) getragen ist, der sich allgemein senkrecht zur Ebene der Rückseite (20B) des Querträgers (20) erstreckt und der ein im Wesentlichen spitzes Profil aufweist, mit einer mit der Rückseite (20B) fest verbundenen Basis, die breiter ist als sein freies Ende, so dass der Arm (28) eine Außenkante (28A) aufweist, die bezüglich der allgemeinen Richtung des Arms (28) leicht schräg verläuft, wobei die Außenkante (28A) beim Anbringen des Trägers auf dem Sockel (11) des Kabelkanals (10) eine Auflagefläche auf einem der Rücksprünge (14) des Sockels bildet, die automatisch ein leichtes Spreizen der Seitenschenkel (13) des Sockels (11) zu bewirken vermag.

6. Installationsgeräteträger nach einem der vorhergehenden Ansprüche,
**dadurch gekennzeichnet, dass** die elastische Verbindung wenigstens eine gewellte elastische Lasche (24) aufweist, die mit dem Rastzahn (23) angeformt ist und an einem Ende Mittel (25) zur Befestigung an dem Querträger (20) aufweist.

7. Installationsgeräteträger nach Anspruch 6,
**dadurch gekennzeichnet, dass** die Befestigungsmittel Rastmittel sind.

8. Installationsgeräteträger nach Anspruch 7,
**dadurch gekennzeichnet, dass** die Rastmittel am Ende der gewellten elastischen Lasche (24) eine Verdickung (25) aufweisen, die mit einem auf der Rückseite (20B) des Querträgers (20) befindlichen Stift (30) elastisch zusammenwirkt.

9. Installationsgeräteträger nach einem der Ansprüche 6 bis 8,
**dadurch gekennzeichnet, dass** jeder Rastzahn (23) zwei zueinander parallele gewellte elastische Laschen (24) aufweist, die die elastische Verbindung bilden.

10. Installationsgeräteträger nach einem der vorhergehenden Ansprüche,
**dadurch gekennzeichnet, dass** die Eingriffsmittel auf jedem der äußeren Ränder (21) des Querträgers einen Rastzahn (23) umfassen.

11. Installationsgeräteträger nach Anspruch 10,
**dadurch gekennzeichnet, dass** die zwei Rastzähne (23) zwei separate Teile bilden, die durch ihre elastische Verbindung (24), die dem Querträger (20) zugeordnet ist, aufgesetzt sind.

12. Installationsgeräteträger nach Anspruch 10,
**dadurch gekennzeichnet, dass** die zwei Rastzähne (23) und ihre zugeordnete elastische Verbindung (24) ein einziges Stück bilden, das an dem Querträger (20) durch ein starres mittleres Teil (25) befestigt ist, das zwischen den elastischen Verbindungen (24) ein Verbindungsteil bildet.

13. Installationsgeräteträger nach einem der Ansprüche 1 bis 12,
**dadurch gekennzeichnet, dass** er die Form eines Rahmens mit zwei parallelen Längsteilen hat, die zwei äußere Querträger verbinden, die an ihren entgegengesetzten äußeren Rändern mit Rastzähnen mit elastischer Verbindung ausgestattet sind.
